# EUROPEAN PATENT SPECIFICATION

(11) **EP 2 594 383 B1**
(45) Date of publication and mention of the grant of the patent: **23.11.2016**
(21) Application number: 11806931.9
(22) Date of filing: 19.07.2011
(51) Int. Cl.: B29L 9/00, B29L 22/00, B29C 41/00, B29C 35/08, B29C 41/42, B29L 31/00, B29K 103/06

(54) **METHOD FOR FORMING HOLLOW MOLDED PRODUCT**
VERFAHREN ZUR FORMUNG EINES HOHLEN FORMPRODUKTS
PROCÉDÉ POUR LA FORMATION D'UN PRODUIT MOULÉ CREUX

(30) Priority: 16.07.2010 JP 2010161672
(43) Date of publication of application: 22.05.2013
(73) Proprietor: Heiwa Kagaku Industry Co., Ltd., Chiba 272-0004 (JP)
(72) Inventor: HATAKEYAMA Harumasa, Ichikawa-shi, Chiba 272-0004 (JP)
(74) Representative: Gill Jennings & Every LLP
(86) International application number: PCT/JP2011/066316
(87) International publication number: WO 2012/008601

(56) References cited:
- DE-A1- 2 318 315
- FR-A- 1 554 789
- JP-A- 49 029 358
- JP-A- 2001 212 834
- JP-A- 2004 066 544
- JP-B1- 44 032 673
- US-A- 3 491 170
- US-A- 4 061 702
- US-A- 5 763 503

## Description

### Technical Field

0001 The present invention pertains to a manufacturing method and apparatus for a hollow molded part manufactured by spraying a molding material into a mold utilizing the principle of electrostatic coating.

### Background Art

0002 The manufacture of hollow molded parts was conventionally accomplished by extruding thermoplastic viscous resin into a pipe shape and expanding it by air blowing in the direct-blow forming method, or by fabricating a preform body in the shape of a test tube by injection molding, then injection blow-molding to expand the part by air blowing or the like.

0003 Direct blow molding can be carried out with only a female mold, and laminated resin hollow molded parts can be inexpensively manufactured by simultaneous extrusion of multiple resins. Since injection blow molding fabricates preforms, the final product weight, wall thickness, and the like of the final molded product are stable, so that mass produced parts can be efficiently manufactured.

0004 However, because these blow moldings stretch the resin, the problem arises that thick and thin places are created in the resin depending on the amount of stretching (the blow ratio).

In addition, because these molding methods homogenize resin viscosity, it is necessary to knead the resin in the stage prior to blow molding in order to release air bubbles in the molten resin, leading to the problem that large amounts of thermal energy are required.

0005 As a technology with an extremely low equipment cost relative to the above-described blow molding machines or injection molding machines, with which the thickness of the molded parts can easily be made uniform, a plastic part molding apparatus has been proposed (e.g., see Patent Citation 1) in which material powder is sprayed into the concave surface of a mold with an opening using an electrostatic spraying apparatus, said mold and sprayed-on molding material are cyclically heated, then said mold and sprayed-on molded material are cooled and parted.

### Prior Art References

US3491170A discloses producing molded plastic articles by means of electrostatic deposition of particulate materials using a solidifying electro - magnetic wave Radiation fixture. FR1554789A discloses removal of molded bottles from the mold, where the hollow body remains held by the molding head as it is parted from the mold opening step.

### Patent Reference

0006 Patent Citation 1: JP-B-S44-32673

### Summary of the Invention

### Problems the Invention Seeks to Resolve

0007 In the above-described plastic product molding apparatus, disclosed in Patent Citation 1, a spray head 46 for spraying electrostatically charged plastic polyethylene particles into the mold 28 is disposed on the outside of a drum 12 attached to multiple molds 28 with holes; open form containers such as trays can be formed, but hollow molded parts such as bottles cannot be formed.

0008 The plastic product molding apparatus disclosed in Patent Citation 1 also requires an ejector 72 or the like for ejecting the resin layer, i.e., the target molded part, from the mold after solidifying. The ejector 72 must have a strength capable of withstanding the dynamic load placed on the target molded part when the target molded part is ejected from the mold, and does not permit thin-walled molded parts such as thin films to be obtained.

0009 In the plastic product molding apparatus disclosed in Patent Citation 1, a step is furthermore necessary to utilize the differential in thermal shrinkage between the mold and the plastic and cool the mold to facilitate separation of the product; in addition pre-processing such as coating the mold with a liquid parting agent is also required.

0010

### (Object of the Invention)

The present invention was undertaken in light of the above-described problems pertaining to conventional hollow molded part manufacturing methods, and has the object of providing a hollow molded part manufacturing method and apparatus capable of easily and efficiently manufacturing extremely thin hollow molded parts of uniform thickness in a stable manner.

The present invention also has the object of providing a hollow molded part manufacturing method and apparatus with a small utilized energy cost.

0011 The present invention has the further object of providing a hollow molded part manufacturing method and apparatus with which, because no internal pressure is applied within the mold at time of molding, and no mold closing pressure is required, does not require a high hardness metal for the mold, and allows for the use of all electrically conductive materials, such as electrically conductive resin, thereby enabling the weight and cost of the mold to be reduced.

The present invention has the further object of providing a hollow molded part manufacturing method and apparatus with extremely high safety at time of molding, as well as high shape fidelity.

### Means for Resolving the Problem

0012 A first comparative example of the invention is a method for manufacturing a hollow molded part, comprising:
a spraying step for forming a resin layer by spraying liquid resin with a differential electrical potential relative to the mold into a mold capable of separation into two or more parts from a spray fixture inserted from an opening portion in said mold;
a solidifying step for solidifying the resin layer; a mold parting step for opening the mold relative to the spray fixture and parting the solidified resin layer from the mold while it is held in the spray fixture;
and a removal step for removing from the spray fixture the resin layer held in the spray fixture.

0013 A first embodiment of the invention is a method for manufacturing a hollow molded part, comprising:
a spraying step for forming a resin layer by spraying a liquid resin having a differential electrical potential relative to the mold into a mold capable of separation into two or more parts from a spray fixture inserted from an opening portion in said mold;
a solidifying step for solidifying the resin layer using a solidifying electromagnetic wave irradiation fixture in place of the spray fixture;
a mold parting step for opening the mold relative to the electromagnetic irradiation fixture and parting the solidified resin layer from the mold while it is held in the electromagnetic irradiation fixture;
and a removal step for removing the resin layer held in the electromagnetic irradiation fixture from the spray fixture.

0014 A second comparative example of the invention is a method for manufacturing a hollow molded part, having:
a mold capable of separation into two or more parts;
a spray fixture inserted from an opening portion in said mold for forming a resin layer on the inside surface of the mold by spraying a charged liquid resin having a charge differential relative to the mold;
a mold drive means for opening the mold relative to the spray fixture and parting the solidified resin layer from the mold while holding it in the spray fixture;
and a removal means for removing the resin layer held in the spray fixture from that spray fixture.

### Effect of the Invention

0016 Using the hollow molded part manufacturing method and apparatus of the present invention, an effect can be gained whereby extremely thin hollow molded parts of uniform thickness can be easily and efficiently manufactured in a stable manner.

Also, using the hollow molded part manufacturing method and apparatus of the present invention, an effect can be gained whereby the cost of energy utilized is small.

0017 In addition, using the hollow molded part manufacturing method and apparatus of the present invention, given that no internal pressure is applied within the mold at the time of molding, and therefore no pressure is required to close the mold, there is no requirement for a high hardness metal for the mold, and all electrically conductive materials, such as electrically conductive resin, may be used. Resins using gold powder, silver powder, copper powder, nickel powder, aluminum powder, chrome powder, carbon powder, or graphite powder as electrically conductive fillers may be used to obtain the effect of lightening and reducing the cost of molds. Electrically conductive plated resin may also be used as another mold material. In resin molds, using resins transmissive to electromagnetic waves enables irradiation by solidifying electromagnetic waves from outside the resin mold.

Furthermore, according to the hollow molded part manufacturing method and apparatus of the present invention, there are few mechanical drive parts and no major drive force is required, so very high safety during molding can be achieved.

0018 The hollow molded part manufacturing method and apparatus of the present invention has the further advantage of having few parts forming burrs, and no overflow of material, so material losses do occur.

0019 Injection molding or extrusion molding, or sheet molding, inflation molding, blow molding, compression molding, or the like make use of a thermoplastic resin solid at room temperature or a heat-cured resin. These thermoplastic resins or heat-cured resins require blending of colorants with a screw. In such instances there is a tendency for differences in the flow between the molten state resin and the colorants or additives to flow differently inside the resin flow path, leading to cosmetic or functional problems with products, such as welds, poor dispersion, or the like.

In the present invention, when resin raw materials which are liquid at room temperature, such as UV-cured resins or emulsions, are used, coloring agents or additives such as pigments and dyes may be pre-blended. Resin sprayed from the spray nozzle does not pass through a pathway, and reaches the mold surface as it is being uniformly dispersed due to the mutual electrical repulsion of the resin particles, so there is no risk of problems such as welds or poor dispersions arising.

0020 Aspects of the present invention are given below. In the first comparative example and the first embodiment, the spraying step is carried out multiple times to form multiple resin layers.

0021 In the first comparative example and the first embodiment,
the resin is a heat-cured resin; the mold heated in the spraying step is used and the solidifying step is carried out simultaneously with the spraying step.

0022 In the first comparative example and the first embodiment,
the resin is a UV-cured resin,
and the solidifying electromagnetic wave irradiation fixture irradiates the resin layer with UV.

0023 In the first comparative example and the first embodiment
the resin is a light-cured resin,
and the solidifying electromagnetic wave irradiation fixture irradiates the resin layer with visible light.

0024 In the first comparative example and the first embodiment,
the resin is a thermoplastic resin,
and utilizing the mold cooled in the spraying step, the solidifying step and the spraying step are carried out simultaneously.

0025 In the first comparative example and the first embodiment,
the resin is an emulsion resin,
and in the spraying step an emulsion solvent is vaporized in the mold.

0026 In the first comparative example and the first embodiment,
in the parting step the electrical charge of the mold is set to be the same as the electrical charge of the solidified resin layer.

0027 In the first comparative example and the first embodiment,
the mold has a positive charge and the resin has a negative charge.

0028 In the first comparative example and the first embodiment,
the mold has a negative charge and the resin has a positive charge.

0029 In the first comparative example and the first embodiment,
the mold is brought to ground and the resin has a negative charge.

0030 In the first comparative example and the first embodiment,
the mold is brought to ground and the resin has a positive charge.

0031 In the first comparative example and the first embodiment,
the mold is made of metal or electrically conductive resin.

0032 In the second embodiment and the second comparative example,
the mold has a positive charge and the resin has a negative charge.

0033 In the second embodiment and the second comparative example,
the mold has a negative charge and the resin has a positive charge.

0034 In the second embodiment and the second comparative example,
the mold is brought to ground and the resin has a negative charge.

0035 In the second embodiment and the second comparative example,
the mold is brought to ground and the resin has a positive charge.

### Brief Description of Figures

0036
Fig. 1: A schematic diagram of the hollow molded part manufacturing apparatus of a first comparative example of the present invention.
Fig. 2: A schematic diagram of the spraying state in the hollow molded part manufacturing apparatus of a first comparative example of the present invention.
Fig. 3: A schematic diagram of the mold-opening state in the hollow molded part manufacturing apparatus of a first comparative example of the present invention.
Fig. 4: A schematic diagram of the spraying state in the hollow molded part manufacturing apparatus of a first embodiment of the present invention.
Fig. 5: A schematic diagram of the solidifying state in the hollow molded part manufacturing apparatus of a first embodiment of the present invention.
Fig. 6: A schematic diagram of the mold-opening state in the hollow molded part manufacturing apparatus of a first embodiment of the present invention.

### Embodiments of the Invention

0037

### (First Comparative example)

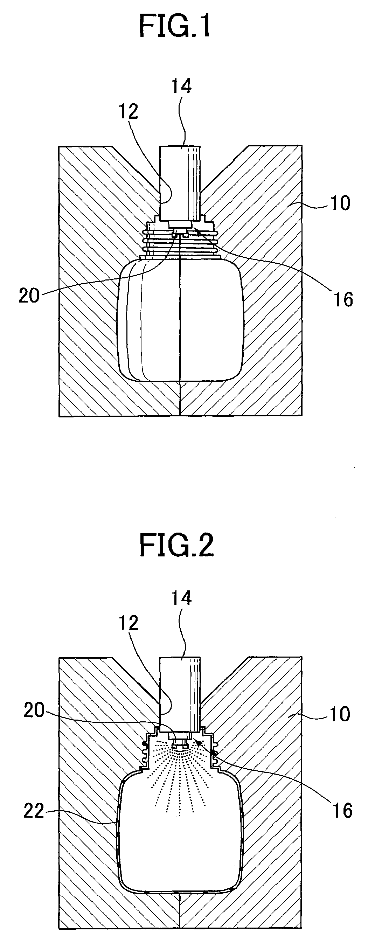

In the hollow molded part manufacturing apparatus of the first comparative example, as shown in Fig. 1, a nozzle portion insulated by an insulating body 14 with a gap tolerance of 0.2 mm or less is disposed on an opening 12 on a bottle mold 10, capable of division into two parts. The nozzle portion 16 has a nozzle body 20, being the spray nozzle of an electrostatic spray gun generally used for electrostatic coating. The nozzle body 20 is set to ground and a high voltage of 10kV is applied to the bottle mold 10 to form an electrostatic field.

0038 In the hollow molded part manufacturing apparatus of the first comparative example, negatively charged molding resin, not containing a binder, is sprayed from the nozzle portion 16. The molding resin, as shown in Fig. 2, forms a molding resin layer 22 with a uniform thickness of 0.01 to 2.0 mm, and preferably from 0.05 to 0.6 mm, on the inside surface of the bottle mold 10, and the molding resin layer 22 is tightly adhered to the inside surface of the bottle mold 10 by electrostatic force.

0039 Examples of molding resin materials include epoxy resin, melamine resin, phenol resin, alkyd resin, amino-alkyd resin, vinyl resin, acrylic resin, urethane resin, silicone resin, silicon resin, fluorine resin, urea resin, polyacetal resin, olefin resins, styrene resins, vinyl chloride resins, polyester resins, polyamide resins, cellulose, drying oil, and the like.

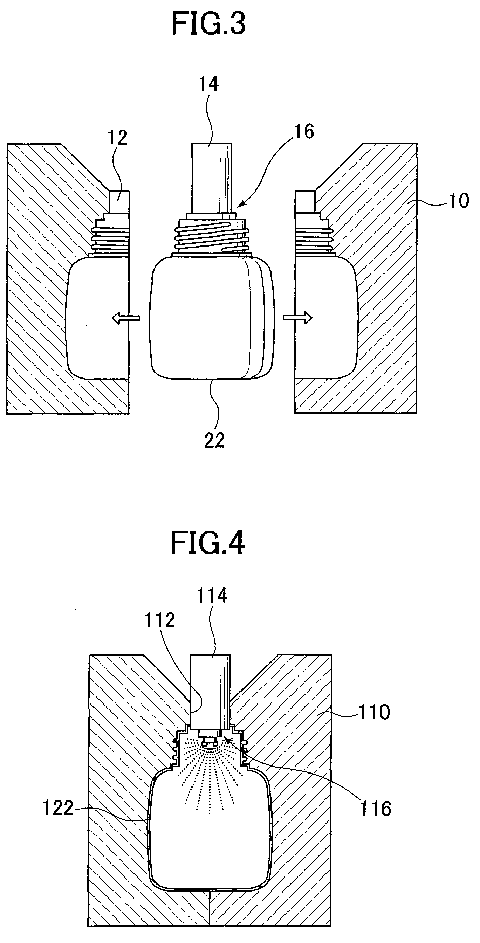

0040 Following this, as shown in Fig. 3, the bottle mold 10 is opened into two parts about the affixed nozzle portion 16 and left attached to the molding resin layer 22. The molding resin layer 22 is removed from the nozzle portion 16 to form a bottle. The molding resin layer 22, i.e., the bottle, has an average thickness of 0.6 mm.

0041

### (First Embodiment)

In the hollow molded part manufacturing apparatus of the first embodiment, as shown in Fig. 4, as in the first embodiment, a nozzle portion 116 insulated by an insulating body 114 with a gap tolerance of 0.2 mm or less is disposed on an opening 112 on a bottle mold 110, capable of division into two parts. In the hollow molded part manufacturing apparatus of the second embodiment, negatively charged UV-cured resin, not containing a binder, is sprayed from the nozzle body 116. The UV-cured molding resin forms a molding resin layer 122 with a uniform thickness on the inside surface of the bottle mold 110, and said molding resin layer 122 is tightly adhered to the surface of the bottle mold 110 by electrostatic force.

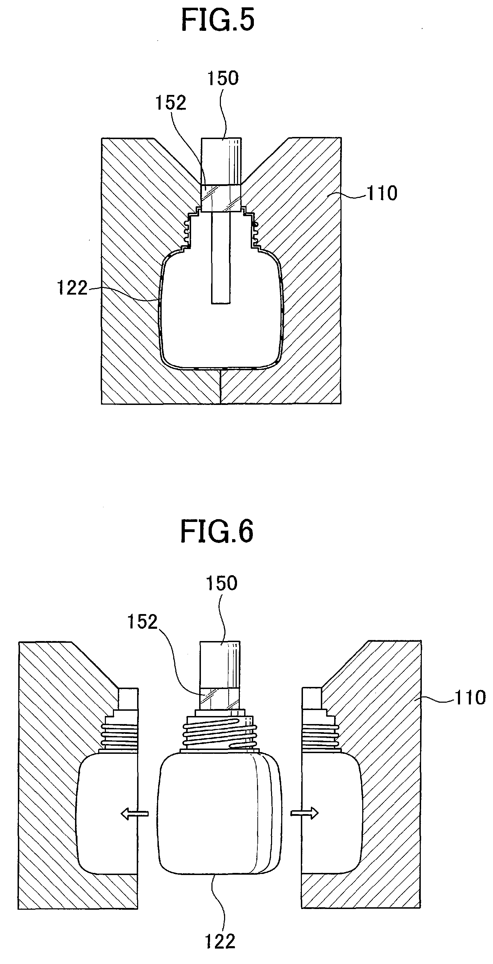

0042 Thereafter, as shown in Fig. 5, the nozzle portion 116 is pulled out and a UV irradiating portion 150 is inserted in its place. The UV irradiating portion 150 irradiates with UV containing wavelengths of 200 to 450 nm; it has the same shaped cross section as the nozzle portion 116, and has a nozzle transparent body 152 with a gap tolerance relative to the mold opening of 0.2 mm or less, transmissive to UV.

0043 Following this, as shown in Fig. 6, the bottle mold 110 is opened into two parts about the affixed UV irradiating portion 150, and the molding resin layer 122 is left attached to the UV irradiating portion 150. The molding resin layer 122 is removed from the UV irradiating portion 150 to form a bottle.

0044

### (Second Embodiment)

The first comparative example and the first embodiment each have one resin spraying step and one resin solidifying step, but a laminated molded part can be obtained by repeated iterations of each of those respective steps.

0045 In the first embodiment a UV-cured resin was used, but other light-cured resins may also be used.

0046 The bottle mold is constantly heated to 100°C or above, an aqueous emulsion not containing a binder adhering to metal is electrostatically sprayed, and the resin is solidified using the heat of the bottle mold to vaporize any water component.

0047 Conversely, the mold is kept at a constant 20°C or below, a thermoplastic resin such as polyethylene or polypropylene is electrostatically sprayed in a molten state, and the resin is solidified by cooling from the bottle mold.

0048 In addition, the spray nozzle is changed to a spray gun of the type generally used for powder coating, and a heat-cured resin is used as the raw material for spraying and sprayed onto the inside surface of a bottle mold constantly heated to the resin solidification temperature to solidify the resin. Since these methods do not require repeated heating and cooling of the mold, energy losses can be reduced to a minimum. At the same time, since there is no need to wait until the bottle mold temperature heats up or cools down to the temperature required for the next stage, there is an additional advantage of high productivity per bottle mold.

### Explanation of Reference Numerals

0049 10, 110: bottle molds 12, 112: openings 14, 114: insulating bodies 16, 116: nozzle portions 20, 120: nozzle bodies 22, 122: molding resin layers

## Claims

1. A method for manufacturing a hollow molded part, **characterized by** comprising:
a spraying step for forming a resin layer (122) by spraying liquid resin with a differential electrical potential relative to the mold into a mold (110) capable of separation into two or more parts from a spray fixture (116) inserted from an opening portion (112) in said mold;
a solidifying step for solidifying the resin layer (122) using a solidifying electromagnetic wave irradiation fixture (150) in place of the spray fixture;
a mold parting step for opening the mold (110) relative to the electromagnetic irradiation fixture (150) and parting the solidified resin layer (122) from the mold (110) while it is held in the electromagnetic irradiation fixture (150);
and a removal step for removing the resin layer (122) held in the electromagnetic irradiation fixture (150) from the spray fixture (116).

2. The method for manufacturing a hollow molded part of Claim 1, wherein the spraying step is carried out multiple times to form multiple resin layers.

3. The method for manufacturing a hollow molded part of Claim 1, wherein
the resin is a heat-cured resin, and utilizing the mold heated in the spraying step,
the solidifying step and the spraying step are carried out simultaneously.

4. The method for manufacturing a hollow molded part of Claim 1, wherein
the resin is a UV-cured resin, and in the solidifying step the solidifying electromagnetic wave irradiation fixture (150) irradiates UV onto the resin layer (122).

5. The method for manufacturing a hollow molded part of Claim 1, wherein the resin is a light-cured resin,
and in the solidifying step the solidifying electromagnetic wave irradiation fixture (150) irradiates visible light onto the resin layer (122).

6. The method for manufacturing a hollow molded part of Claim 1, wherein the resin is a thermoplastic resin,
and utilizing the mold cooled in the spraying step, the solidifying step and the spraying step are carried out simultaneously.

7. The method for manufacturing a hollow molded part of Claim 1, wherein the resin is an emulsion resin,
and in the spraying step an emulsion solvent is vaporized in the mold.

8. The method for manufacturing the hollow molded part of Claim 1, whereby in the parting step, the electrical charge of the mold is set to be the same as the electrical charge of the solidified resin layer (122).

9. The method for manufacturing the hollow molded part of Claim 1, wherein the mold is positively charged and the resin is negatively charged.

10. The method for manufacturing the hollow molded part of Claim 1, wherein the mold is negatively charged and the resin is positively charged.

11. The method for manufacturing the hollow molded part of Claim 1, wherein the mold is set to ground and the resin is negatively charged.

12. The method for manufacturing the hollow molded part of Claim 1, wherein the mold is set to ground and the resin is positively charged.

## Patentansprüche

1. Verfahren zum Herstellen eines hohlen Formteils, **gekennzeichnet durch** Umfassen:
eines Spritzschritts zum Ausbilden einer Harzschicht (122) **durch** Spritzen von flüssigem Harz mit einem relativ zur Form anderen elektrischen Potential in eine Form (110), die in zwei oder mehr Teile trennbar ist, von einer Spritzvorrichtung (116), die von einem Öffnungsabschnitt (112) in der Form eingeführt ist;
eines Verfestigungsschritts zum Verfestigen der Harzschicht (122) unter Nutzen einer elektromagnetische Wellen abstrahlendenden Verfestigungsvorrichtung (150) an Stelle der Spritzvorrichtung;
eines Formtrennschritts zum Öffnen der Form (110) relativ zu der elektromagnetische Abstrahlungsvorrichtung (150) und zum Trennen der verfestigten Harzschicht (122) von der Form (110), während sie in der elektromagnetischen Abstrahlungsvorrichtung (150) gehalten wird; und
eines Entnahmeschritts zum Entnehmen der in der elektromagnetischen Abstrahlungsvorrichtung (150) gehaltenen Harzschicht (122) von der Spritzvorrichtung (116).

2. Verfahren zum Herstellen eines hohlen Formteils nach Anspruch 1, wobei der Spritzschritt mehrmals ausgeführt wird, um mehrere Harzschichten zu bilden.

3. Verfahren zum Herstellen eines hohlen Formteils nach Anspruch 1, wobei das Harz ein wärmegehärtetes Harz ist und unter Nutzen der in dem Spritzschritt erwärmten Form der Verfestigungsschritt und der Spritzschritt gleichzeitig ausgeführt werden.

4. Verfahren zum Herstellen eines hohlen Formteils nach Anspruch 1, wobei das Harz ein UV-gehärtetes Harz ist und beim Verfestigungsschritt die verfestigende, elektromagnetische Wellen abstrahlende Vorrichtung (150) UV auf die Harzschicht (122) abstrahlt.

5. Verfahren zum Herstellen eines hohlen Formteils nach Anspruch 1, wobei
das Harz ein lichtgehärtetes Harz ist und
bei dem Verfestigungsschritt die verfestigende, elektromagnetische Wellen abstrahlende Vorrichtung (150) die Harzschicht (122) mit sichtbarem Licht bestrahlt.

6. Verfahren zum Herstellen eines hohlen Formteils nach Anspruch 1, wobei
das Harz ein thermoplastisches Harz ist und
unter Nutzen der in dem Spritzschritt abgekühlten Form der Verfestigungsschritt und der Spritzschritt gleichzeitig ausgeführt werden.

7. Verfahren zum Herstellen eines hohlen Formteils nach Anspruch 1, wobei
das Harz ein Emulsionsharz ist und
bei dem Spritzschritt ein Emulsionslösungsmittel in der Form verdampft wird.

8. Verfahren zum Herstellen des hohlen Formteils nach Anspruch 1, wodurch in dem Trennschritt die elektrische Ladung der Form gleich der elektrischen Ladung der verfestigten Harzschicht (122) eingestellt wird.

9. Verfahren zum Herstellen des hohlen Formteils nach Anspruch 1, wobei die Form positiv geladen wird und das Harz negativ geladen wird.

10. Verfahren zum Herstellen des hohlen Formteils nach Anspruch 1, wobei die Form negativ geladen wird und das Harz positiv geladen wird.

11. Verfahren zum Herstellen des hohlen Formteils nach Anspruch 1, wobei die Form geerdet wird und das Harz negativ geladen wird.

12. Verfahren zum Herstellen des hohlen Formteils nach Anspruch 1, wobei die Form geerdet wird und das Harz positiv geladen wird.

## Revendications

1. Procédé pour fabriquer une pièce moulée creuse, **caractérisé en ce qu'**il comprend :
une étape de pulvérisation pour former une couche de résine (122) par pulvérisation de résine liquide, au moyen d'un potentiel électrique différentiel par rapport au moule, dans un moule (110) apte à une séparation entre deux parties ou davantage, à partir d'un accessoire de pulvérisation (116) inséré depuis une partie d'ouverture (112) dans ledit moule ;
une étape de solidification pour solidifier la couche de résine (122) en utilisant un accessoire de rayonnement d'ondes électromagnétiques de solidification (150) à la place de l'accessoire de pulvérisation ;
une étape de séparation de moule pour ouvrir le moule (110) relativement à l'accessoire de rayonnement électromagnétique (150) et séparer la couche de résine solidifiée (122) du moule (110) tandis qu'elle est maintenue dans l'accessoire de rayonnement électromagnétique (150) ;
et une étape d'extraction pour extraire de l'accessoire de pulvérisation (116) la couche de résine (122) maintenue dans l'accessoire de rayonnement électromagnétique (150).

2. Procédé pour fabriquer une pièce moulée creuse selon la revendication 1, dans lequel l'étape de pulvérisation est réalisée de multiples fois afin de former des couches de résine multiples.

3. Procédé pour fabriquer une pièce moulée creuse selon la revendication 1, dans lequel
la résine est une résine thermodurcie, et lors de l'utilisation du moule chauffé à l'étape de pulvérisation,
l'étape de solidification et l'étape de pulvérisation sont réalisées simultanément.

4. Procédé pour fabriquer une pièce moulée creuse selon la revendication 1, dans lequel
la résine est une résine durcie sous UV, et, à l'étape de solidification, l'accessoire de rayonnement d'ondes électromagnétiques de solidification (150) fait rayonner des UV sur la couche de résine (122).

5. Procédé pour fabriquer une pièce moulée creuse selon la revendication 1, dans lequel
la résine est une résine durcie à la lumière,
et, à l'étape de solidification, l'accessoire de rayonnement d'ondes électromagnétiques de solidification (150) fait rayonner de la lumière visible sur la couche de résine (122).

6. Procédé pour fabriquer une pièce moulée creuse selon la revendication 1, dans lequel
la résine est une résine thermoplastique,
et, lors de l'utilisation du moule refroidi à l'étape de pulvérisation, l'étape de solidification et l'étape de pulvérisation sont réalisées simultanément.

7. Procédé pour fabriquer une pièce moulée creuse selon la revendication 1, dans lequel
la résine est une résine en émulsion,
et, à l'étape de pulvérisation, un solvant en émulsion est vaporisé dans le moule.

8. Procédé pour fabriquer la pièce moulée creuse selon la revendication 1, grâce à quoi, à l'étape de séparation, la charge électrique du moule est définie pour être la même que la charge électrique de la couche de résine solidifiée (122).

9. Procédé pour fabriquer la pièce moulée creuse selon la revendication 1, dans lequel le moule est chargé positivement et la résine est chargée négativement.

10. Procédé pour fabriquer la pièce moulée creuse selon la revendication 1, dans lequel le moule est chargé négativement et la résine est chargée positivement.

11. Procédé pour fabriquer la pièce moulée creuse selon la revendication 1, dans lequel le moule est mis à la masse et la résine est chargée négativement.

12. Procédé pour fabriquer la pièce moulée creuse selon la revendication 1, dans lequel le moule est mis à la masse et la résine est chargée positivement.
